(19) Europäisches Patentamt
European Patent Office
Office européen des brevets

(11) **EP 4 506 871 A1**

(12) **EUROPEAN PATENT APPLICATION**
published in accordance with Art. 153(4) EPC

(43) Date of publication:
**12.02.2025 Bulletin 2025/07**

(21) Application number: 23784952.6

(22) Date of filing: **04.04.2023**

(51) International Patent Classification (IPC):
*G06Q 10/06* (2023.01)        *G06Q 20/12* (2012.01)
*G06Q 10/10* (2023.01)        *G06Q 20/20* (2012.01)

(52) Cooperative Patent Classification (CPC):
G06Q 10/06; G06Q 10/10; G06Q 20/12;
G06Q 20/20

(86) International application number:
**PCT/KR2023/004493**

(87) International publication number:
**WO 2023/195727 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **04.04.2022   KR 20220041603**

(71) Applicant: **Kim, Wook**
**Seoul 07280 (KR)**

(72) Inventor: **Kim, Wook**
**Seoul 07280 (KR)**

(74) Representative: **Viering, Jentschura & Partner
mbB
Patent- und Rechtsanwälte
Am Brauhaus 8
01099 Dresden (DE)**

(54) **SYSTEM FOR PROVIDING MYDATA SERVICE BY MEANS OF INFORMATION PROVISION AND REVENUE DISTRIBUTION**

(57)    Provided is a system for providing a MyData service using information provision and profit distribution, which includes at least one user terminal that consents to information provision of at least one type of MyData and receives profit distribution when the at least one type of MyData of which information is provided is utilized, an enterprise terminal that uploads target data for which information provision is required and receives MyData corresponding to the target data, and a MyData service provision server that includes a consent confirmation unit that receives consent to information provision of at least one type of MyData from the at least one user terminal, a collection unit that collects the at least one type of MyData from the at least one user terminal, an information provision unit that extracts MyData corresponding to target data for which information provision is required and provides the MyData to the enterprise terminal when the target data is received from the enterprise terminal, and a profit distribution unit that distributes profits to at least one user terminal that has provided MyData provided to the enterprise terminal.

FIG. 1

**Description**

CROSS-REFERENCE TO RELATED APPLICATION

This application claims priority to and the benefit of Korean Patent Application No. 10-2022-0041603, filed on April 4, 2022, the disclosure of which is incorporated herein by reference in its entirety.

BACKGROUND

**1. Field of the Invention**

The present invention relates to a system for providing a MyData service using information provision and profit distribution, which provides a platform that distributes profits on a monthly basis to users who provide MyData and allows enterprises to purchase only MyData corresponding to target data that the enterprises need among MyData.

**2. Discussion of Related Art**

MyData means guaranteeing rights of individuals to their own information and opening and utilizing personal data, which is individuals' data, in accordance with the consent of individuals who are information subjects. MyData in the financial field is a service that allows a third party to collect personal financial data such as account balances and transaction details opened at various financial institutions or to order payment on behalf of customers. Therefore, MyData can increase the degree of utilization of personal data of individuals who are information subjects and create an environment where companies with excellent capabilities can compete on equal footing with large financial institutions. Recent trends related to the utilization of personal information include the MyData service based on the introduction and utilization of pseudonyms and anonymous information, and the right to data portability. MyData service is attracting attention in terms of reorganizing the structure among data utilization subjects and strengthening information subjects' right to control and choice. MyData is a system that promotes the distribution and use of personal data while guaranteeing the basic rights of individuals. The domestic and international MyData industry provides services that allow safe utilization of personal data such as integrated inquiry of personal information and credit and asset management in accordance with the exercise of the rights of information subjects.

At this time, methods of forming an asset integration platform by sharing MyData or using MyData have been researched and developed. In this regard, in the related art, Korean Registered Patent No. 10-2201679 (published on January 12, 2021) and Korean Registered Patent No. 10-2356613 (published on February 9, 2022) disclose a configuration in which a decentralized identifier (DID) is issued based on blockchain from a user terminal, MyData is stored in a private cloud, MyData is provided when a client terminal requests MyData and a configuration in which access to MyData is obtained from a user terminal, financial information is extracted to analyze consumption, and consumption information is extracted from financial information to provide consumption analysis data, respectively.

However, in the former case, there is no reason for a user to consent to the information provision of MyData because the profits from using MyData on a client terminal are not distributed at all to a user who is an individual who provided MyData. In the latter case, it is stated that consumption analysis data is provided, but most card companies only provide sales information, and thus no purchase list or service list is provided, making the analysis of what items or services the money was spent on unclear. Accordingly, research and development of a platform that allows profits to be distributed to users who provide MyData and allows enterprises to purchase only target data they need is required.

SUMMARY OF THE INVENTION

The present invention is directed to providing a system for providing a MyData service using information provision and profit distribution that may collect MyData and build a database when a user terminal consents to information provision of MyData, extract MyData corresponding to desired target data among MyData when an enterprise terminal requests the desired target data and transmit the MyData to the enterprise terminal, distribute profits to the user terminal that provides MyData corresponding to the target data on a monthly basis to thereby form a virtuous cycle structure, and attract long-term customers by providing monthly MyData to the enterprise terminal and allowing the enterprise terminal to apply for a subscription service. However, technical problems to be solved by this embodiment are not limited to the technical problem described above, and there may be other technical problems.

According to an aspect of the present invention, there is provided a system for providing a MyData service using information provision and profit distribution, including at least one user terminal that consents to information provision of at least one type of MyData and receives profit distribution when the at least one type of MyData of which information is provided is utilized, an enterprise terminal that uploads target data for which information provision is required and receives MyData corresponding to the target data, and a MyData service provision server including a consent confirmation unit that receives consent to information provision of at least one type of MyData from the at least one user terminal, a collection unit that collects the at least one type of MyData from the at least one user terminal, an information provision unit that extracts MyData corresponding to target data for which information provision is required and provides the MyData to the enterprise terminal when the target data is received from the enterprise terminal, and a profit distribution unit that distributes profits to at least one user terminal that has provided MyData provided to the enterprise terminal.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 is a diagram for describing a system for providing a MyData service using information provision and profit distribution according to an embodiment of the present invention;
FIG. 2 is a block diagram for describing a MyData service provision server included in the system of FIG. 1;
FIGS. 3 and 4 are diagrams for describing an embodiment in which a MyData service using information provision and profit distribution according to an embodiment of the present invention is implemented; and
FIG. 5 is an operation flowchart for describing a method of providing a MyData service using information provision and profit distribution according to an embodiment of the present invention.

DETAILED DESCRIPTION OF EXEMPLARY EMBODIMENTS

Hereinafter, embodiments of the present invention will be described in detail with reference to the accompanying drawings so that those skilled in the art may easily implement the present invention. However, the present invention may be implemented in many different forms and is not limited to the embodiments described herein. In addition, parts that are not related to the description are omitted from the drawings in order to clearly describe the present invention, and similar parts are given similar reference numerals throughout the specification.
Throughout the specification, when a part is described as being "connected" to another part, this includes not only a case where the part is "directly connected" to the other part but also a case where the part is "electrically connected" to the other part with another element in between. In addition, when a part is described as "including" a certain component, this means that the part may further include other components, rather than excluding other components, unless specifically stated to the contrary, and it should be understood that this does not preclude the presence or addition of one or more other features, numbers, steps, operations, components, parts, or combinations thereof.
As used throughout the specification, the terms "about," "substantially," etc. are used to mean, when manufacturing and material tolerances inherent in a mentioned meaning are given, at or close to that numerical value, and are used to prevent unscrupulous infringers from unfairly exploiting the disclosure in which accurate or absolute numerical values are mentioned to aid understanding of the present invention. As used throughout the specification of the present invention, the term "operation of (performing)" or "operation of' does not mean "operation for."
In this specification, "unit" includes a unit realized by hardware, a unit realized by software, and a unit realized using both. In addition, one unit may be realized using two or more pieces of hardware, and two or more units may be realized using one piece of hardware. Meanwhile, "unit" is not limited to software or hardware, and a "unit" may be configured to reside in an addressable storage medium or may be configured to regenerate one or more processors. Accordingly, as an example, "unit" refers to components such as software components, object-oriented software components, class components, and task components, processes, functions, attributes, procedures, subroutines, segments of program code, drivers, firmware, microcode, circuits, data, databases, data structures, tables, arrays, and variables. The functions provided within the components and "units" may be combined into a smaller number of components and "units," or may be further separated into additional components and "units." In addition, the components and "units" may be implemented to regenerate one or more CPUs within a device or secure multimedia card.
In this specification, some of the operations or functions described as being performed by a terminal, an apparatus, or a device may instead be performed on a server connected to the terminal, the apparatus, or the device. Likewise, some of the operations or functions described as being performed by the server may also be performed by the terminal, the apparatus, or the device connected to the server.
In this specification, some of the operations or functions described as mapping or matching with a terminal may be interpreted to mean mapping or matching with the terminal's unique number, which is identifying data of the terminal, or personal identification information.
Hereinafter, the present invention will be described in detail with reference to the accompanying drawings.

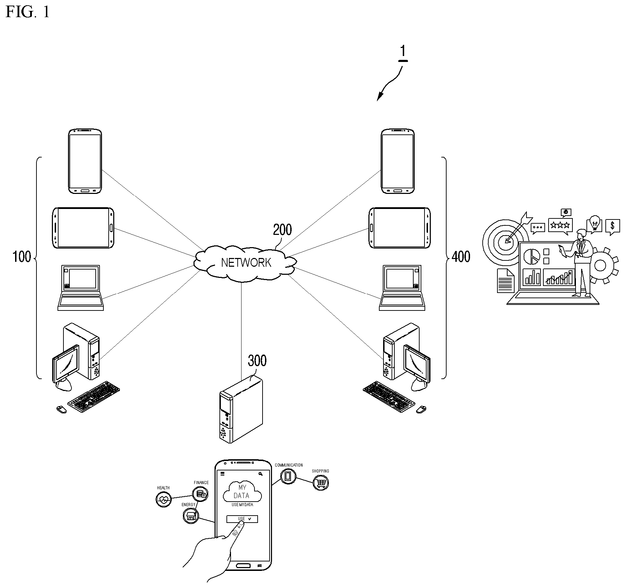

FIG. 1 is a diagram for describing a system for providing a MyData service using information provision and profit distribution according to an embodiment of the present invention. Referring to FIG. 1, a MyData service provision system 1 using information provision and profit distribution may include at least one user terminal 100, a MyData service provision server 300, and at least one enterprise terminal 400. However, since the MyData service provision system 1 using information provision and profit distribution shown in FIG. 1 is only an embodiment of the present invention, the present invention is not to be construed as limited through FIG. 1.

At this time, components in FIG. 1 are generally connected through a network 200. For example, as shown in FIG. 1, at least one user terminal 100 may be connected to the MyData service provision server 300 through the network 200. In addition, the MyData service provision server 300 may be connected to at least one user terminal 100 and at least one enterprise terminal 400 through the network 200. In addition, at least one enterprise terminal 400 may be connected to the MyData service provision server 300 through the network 200.

Here, the network may be a connection structure that allows information exchange between nodes such as a plurality of terminals and servers. Examples of such a network include a local area network (LAN), a wide area network (WAN), the Internet (WWW: World Wide Web), wired and wireless data communication networks, a telephone network, wired and wireless television communication networks, and the like. Examples of wireless data communication networks include, but are not limited to, 3G, 4G, 5G, 3rd Generation Partnership Project (3GPP), 5th Generation Partnership Project (5GPP), Long Term Evolution (LTE), World Interoperability for Microwave Access (WiMAX), Wi-Fi, the Internet, a LAN, a wireless LAN, a WAN, a personal area network (PAN), radio frequency (RF), a Bluetooth network, a near-field communication (NFC) network, a satellite broadcasting network, an analog broadcasting network, a digital multimedia broadcasting (DMB) network, and the like.

In the following, the term "at least one" is defined to include singular and plural terms. Even without the term "at least one," it is obvious that each component may exist in singular or plural, and may be singular or plural. In addition, whether each component is provided in singular or plural may be changed depending on the embodiment.

At least one user terminal 100 may be a terminal of a user who consents to information provision by designating a range, type, and item of MyData using a web page, an app page, a program, or an application related to the MyData service using information provision and profit distribution, and receives profit distribution on a monthly basis when the MyData of which information is provided is used. Of course, it is obvious that a monthly settlement concept may be changed in real time, and a settlement cycle may also be changed.

Here, at least one user terminal 100 may be implemented as a computer capable of accessing a remote server or terminal through a network. Here, the computer may include, for example, a notebook computer, a desktop computer, a laptop computer, etc. equipped with a navigation system and a web browser. At this time, at least one user terminal 100 may be implemented as a terminal capable of accessing a remote server or terminal through a network. At least one user terminal 100 is, for example, a wireless communication device that guarantees portability and mobility, and may include all types of handheld wireless communication devices such as a navigation device, a personal communication system (PCS), a global system for mobile communications (GSM) device, a personal digital cellular (PDC) device, a personal handyphone system (PHS), a personal digital assistant (PDA), an international mobile telecommunication (IMT)-2000 device, a code division multiple access (CDMA)-2000 device, a W-CDMA device, a wireless broadband internet (WiBro) terminal, a smartpad, and a tablet PC.

The MyData service provision server 300 may be a server that provides a MyData service web page, app page, program, or application using information provision and profit distribution. The MyData service provision server 300 may be a server that receives consent from the user terminal 100 to provide information provision of MyData and distributes profits for the remaining amount excluding a commission when profits are generated from the use of MyData. In addition, the MyData service provision server 300 may be a server that extracts MyData corresponding to target data and transmits the MyData to the enterprise terminal 400 when the enterprise terminal 400 designates the target data, and distributes profits to the user terminal 100 that has provided MyData corresponding to the target data.

Here, the MyData service provision server 300 may be implemented as a computer that may access a remote server or terminal through a network. Here, the computer may include, for example, a notebook computer, a desktop computer, a laptop computer, etc. equipped with a navigation system and a web browser.

At least one enterprise terminal 400 may be an enterprise terminal that uses a web page, app page, program, or application related to the MyData service using information provision and profit distribution. At least one enterprise terminal 400 may be a terminal that provides desired target data, receives MyData corresponding to the target data from the MyData service provision server 300, and pays for it. The at least one enterprise terminal 400 may be a terminal that periodically receives MyData corresponding to target data when applying for a subscription service with the MyData service provision server 300.

Here, at least one enterprise terminal 400 may be implemented as a computer capable of accessing a remote server or terminal through a network. Here, the computer may include, for example, a notebook computer, a desktop computer, a laptop computer, etc. equipped with a navigation system and a web browser. At this time, at least one enterprise terminal 400 may be implemented as a terminal capable of accessing a remote server or terminal through a network. At least one enterprise terminal 400 is, for example, a wireless communication device that guarantees portability and mobility, and may include all types of handheld wireless communication devices such as a navigation device, a PCS, a GSM device, a PDC device, a PHS, a PDA, an IMT-2000 device, a CDMA-2000 device, a W-CDMA device, a WiBro terminal, a smartpad, and a tablet PC.

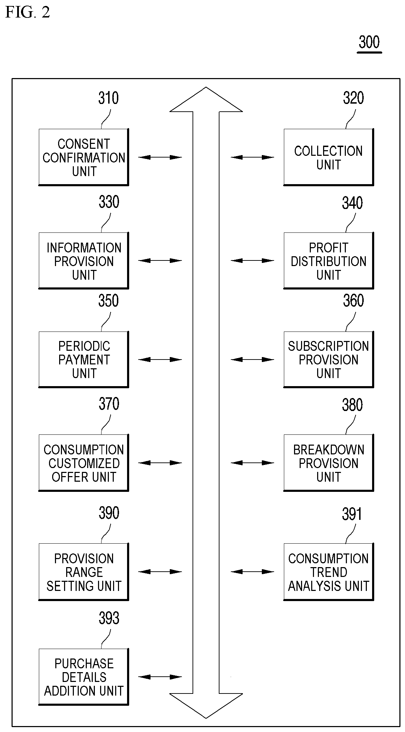

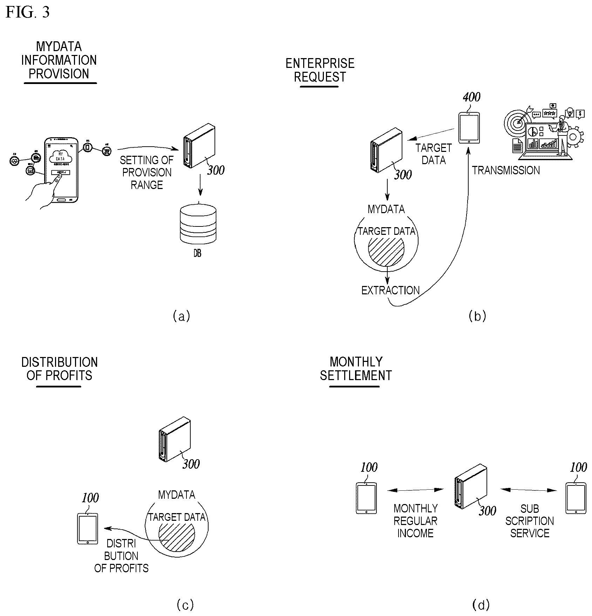

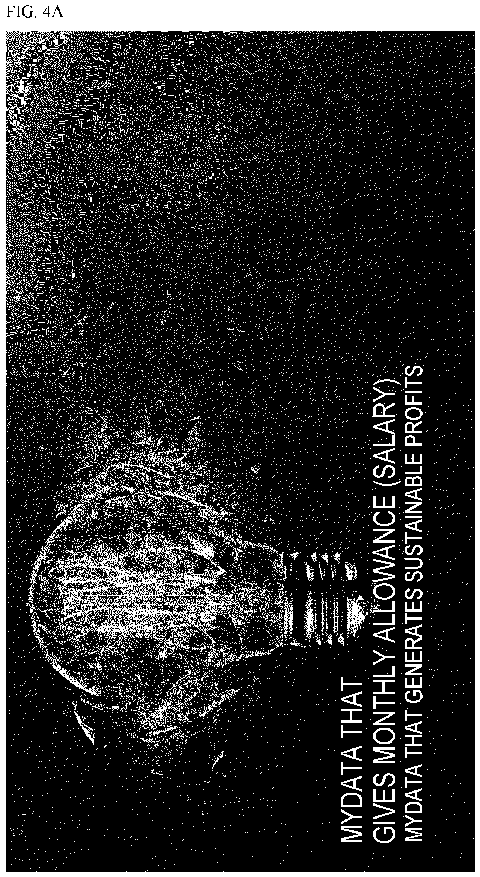

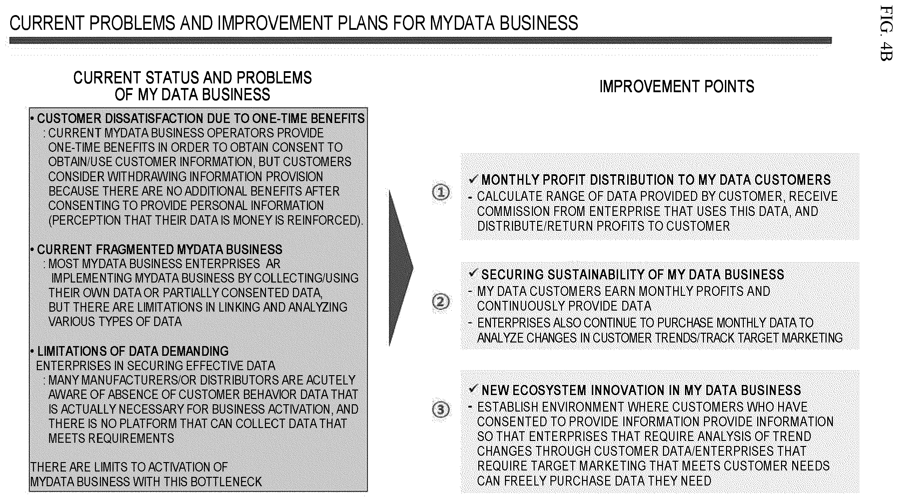

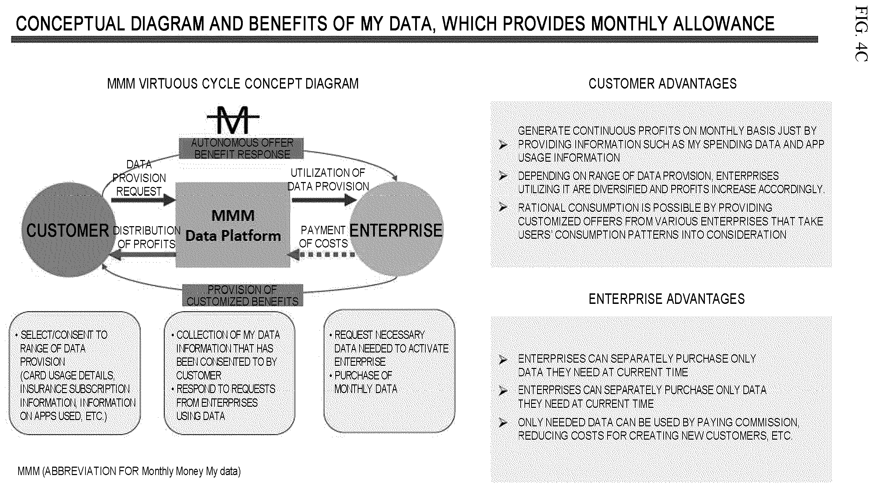

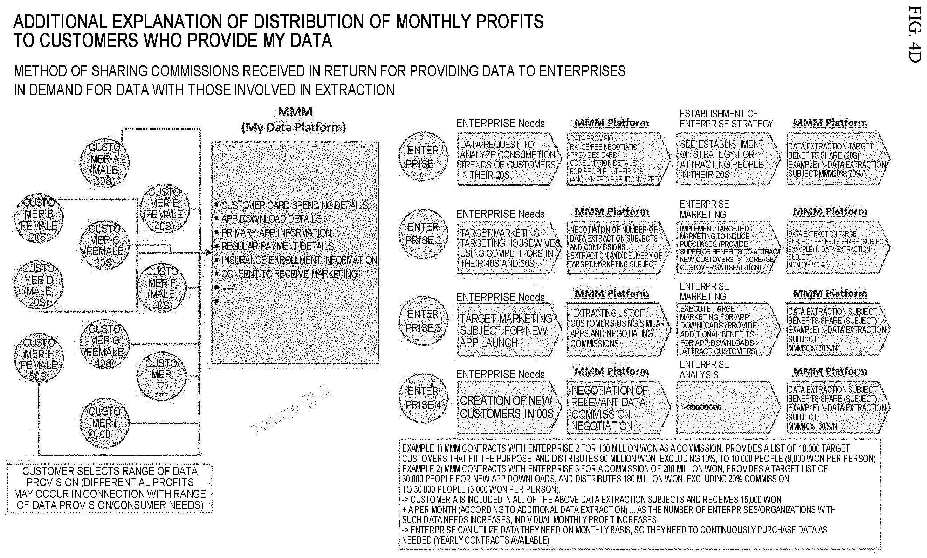

FIG. 2 is a block diagram for describing the MyData service provision server included in the system of FIG. 1. FIGS. 3 and 4 are diagrams for describing an embodiment in which the MyData service using information provision and profit distribution according to an embodiment of the present invention is implemented.

Referring to FIG. 2, the MyData service provision server 300 may include a consent confirmation unit 310, a collection unit 320, an information provision unit 330, a profit distribution unit 340, a periodic payment unit 350, a subscription provision unit 360, a consumption customized offer unit 370, a breakdown provision unit 380, a provision range setting unit 390, a consumption trend analysis unit 391, and a purchase details addition unit 393.

When the MyData service provision server 300 according to an embodiment of the present invention or another server (not shown) operating in conjunction therewith transmits an application, program, app page, web page, etc. of a MyData service using information provision and profit distribution to at least one user terminal 100 and at least one enterprise terminal 400, at least one user terminal 100 and at least one enterprise terminal 400 may install or open the MyData service using the application, program, app page, web page, etc. of the MyData service using information provision and profit distribution. In addition, a service program may be run on at least one user terminal 100 and at least one enterprise terminal 400 using a script executed in a web browser. Here, the web browser is a program that allows a user to use a web (WWW: World Wide Web) service. The web browser is a program that receives and displays hypertext written in Hyper TextMark-up Language (HTML), and includes, for example, Netscape, Explorer, Chrome, etc. In addition, the application is an application on a terminal and includes, for example, an app running on a mobile terminal (smartphone).

Before describing FIG. 2, the basic concept of MyData will be described below. The content described below is not repeatedly described in FIG. 2.

Recently, it has been argued that in order to promote the development of the financial industry by utilizing innovative technologies such as Big Tech and Block Chain, it is necessary to promote the utilization of big data within financial groups and promote the sharing of personal information in the financial sector. This argument is that, at a minimum, there is a need to consider allowing affiliate companies within a financial group to freely share personal data for joint development or marketing of financial products and services. The Ministry of Science and ICT promoted the MyData (personal credit information management business) project in 2019 in accordance with the policy to revitalize the data economy. As demand for personal information management services increases due to increased awareness of credit management, related service industries are also expanding. Some Fintech companies are partnering with the credit information industry to provide integrated information management services by accessing accounts on behalf of customers. However, Fintech companies' entry into the personal information management market is still limited due to restrictions from laws and systems.

MyData is a system that promotes the distribution and utilization of personal data while guaranteeing the basic rights of individuals. MyData Industry provides services that allow safe use of personal data such as integrated inquiry of personal information and credit and asset management in accordance with the exercise of the rights of the information subject. Financial products subject to MyData include credit information such as details of deposits and withdrawals from deposit accounts at banks, mutual finance, savings banks, insurance companies, etc., details of credit card and debit card transactions, loan account information, details of insurance contract information and deposit/withdrawal of securities companies, information on the total amount of financial investment products (stocks, funds, equity-linked securities (ELS), etc.), details of telecommunication fee payment from telecommunication service providers, etc. Accordingly, the obligation to build an open API is imposed not only on banks, credit card companies, and savings banks, but also on securities companies and insurance companies. That is, MyData is a system that allows a third party to integrate and manage personal credit information distributed across individual financial companies such as banks, insurance companies, and credit card companies.

There are two key points to the MyData policy in the financial sector. First, it legally guarantees individuals, who are information subjects, the right to information portability (right to self-determination regarding information) from financial institutions to third parties. The right to information portability is the right for an information subject to request that an entrepreneur holding personal information thereof provide the personal information to another entrepreneur or the information subject himself/herself. The purpose of this is to ensure the active management and utilization of personal information by information subjects to thereby create an environment where consumers can easily select and receive better financial services and actively manage their credit. Second, it imposes an obligation on financial institutions to develop and disclose a standard application program interface (API) to ensure that information is transmitted safely and efficiently. Once the MyData policy is implemented, personal data will not only remain within the individual financial institution that created the personal data, but will be transferred to a third party trusted by consumers and with data analysis capabilities, thereby creating additional value.

The key point of the MyData policy led by the Financial Services Commission is pen banking. In August 2016, the Financial Services Commission opened the existing closed financial payment system centered on credit cards and established the world's first joint payment system (joint open platform) for the banking sector with the purpose of promoting competition and innovation in the financial industry, and strengthening consumer choice in financial services. This created the foundation for receiving bank data in a standardized form through the first joint payment system for the banking sector. In addition, in January 2021, the Financial Services Commission granted approval for the MyData business to five companies in the banking industry, including KB Kookmin Bank, five companies in the credit finance industry, including Shinhan Card, and fourteen companies in the Fintech industry, including Naver Financial. These companies completed API construction in August 2021 and are providing MyData services in earnest.

Accordingly, an embodiment of the present invention provides a platform that may distribute profits according to the information provision on a monthly basis to users who are individuals who provide MyData, in addition to entrepreneurs engaged in the MyData business, prevent the risk of personal information leakage by providing only required information to enterprises that receive MyData by providing MyData that satisfies the target data, reduce data usage fees by purchasing only required information, and guarantee continuous profits through a subscription service by providing MyData on a monthly basis.

Based on the above-described basic concept and referring to FIG. 2, the consent confirmation unit 310 may receive consent to information provision of at least one type of MyData from at least one user terminal 100. At least one user terminal 100 may consent to information provision of at least one type of MyData and receive profit distribution when the MyData of which information is provided is utilized. The at least one type of MyData may include data in the medical, financial, energy, distribution, transportation, small business, welfare, living, and academic fields. MyData according to an embodiment of the present invention may include all data that may be collected with personal consent in addition to policy-related MyData. For example, the MyData may include application-related information, for example, application download details, main usage application information, financial data including card consumption details, regular payment details, insurance subscription information, marketing consent details, etc., but is not limited to those listed, nor are there any exclusions for reasons not listed.

The collection unit 320 may collect at least one type of MyData from at least one user terminal 100.

Upon receiving target data for which information provision is required from the enterprise terminal 400, the information provision unit 330 may extract MyData corresponding to the target data and provide the MyData to the enterprise terminal 400. The enterprise terminal 400 may upload the target data for which information provision is required and receive MyData corresponding to the target data. For example, target data may be the conditions of data that an enterprise wants to collect. When the conditions of 30s, female, professional, and card details are provided as target data, MyData of the user terminal 100 having the [30s-Women-Professional] condition may be extracted, and then the card details can be extracted from the MyData and provided to the enterprise terminal 400.

The profit distribution unit 340 may distribute profits to at least one user terminal 100 that has provided the MyData provided to the enterprise terminal 400.

The periodic payment unit 350 may collect at least one type of MyData from at least one user terminal 100 on a monthly basis, and provide the MyData on a monthly basis when providing the MyData to the enterprise terminal 400. Of course, payments may be made in real time rather than monthly, and the payment cycle can be changed.

In the case of the enterprise terminal 400 that continuously needs monthly MyData on a monthly basis, the subscription provision unit 360 may induce payment for a MyData subscription service, and distribute profits to the user terminal 100 on a monthly basis.

When at least one type of MyData is MyData in the financial field, the consumption customized offer unit 370 may provide an offer of the enterprise terminal 400 corresponding to a consumption pattern to at least one user terminal 100 in consideration of the consumption pattern of at least one user terminal 100. For example, assuming that a user purchases toilet paper, detergent, rice, seasonings, coffee beans, etc. once every three months, enterprises that allow users to buy toilet paper, detergent, rice, seasonings, and coffee beans at low prices, such as E-Mart, Home Plus, and Lotte Mart, may provide offers, such as coupons.

<Homomorphic encryption>

In cryptography, research on mechanisms to meet the requirements according to environmental changes due to digital transformation has been in progress for a long time. In fact, research in cryptography has not been promoted due to digital transformation, but there has been continuous research to improve the safety of data that cannot be solved with public key mechanisms. When the use of passwords for simple user authentication is classified as 1st generation encryption, encryption utilized for transmission, reception and storage of data may be classified as 2nd generation encryption, and encryption utilized for signing and key sharing may be classified as 3rd generation encryption. It can be seen that a situation has arisen where 3rd generation encryption does not meet data safety on a network, and thus 4th generation encryption, that is, encryption without a key, has become necessary. This is because a key is used often in the 3rd generation encryption, and the location of the key is known, which then leads to data safety issues in which cipher text can be decrypted by hacking the key and in which the original is read based on data that appears repeatedly even in encrypted data transmitted over a network.

In order to overcome such problems, computerized processing is performed without disclosure or leakage of information and only an end user can decrypt the content, and a homomorphic encryption algorithm that protects personal information by ensuring the safety in the structural aspect of the system may be used. In general, encryption provides confidentiality and integrity of data. However, homomorphic encryption does not guarantee data integrity, and provides malleability, allowing computations to be performed on encrypted data. Homomorphic encryption schemes have been studied for a long time, but have not received much attention. The problem of fully homomorphic encryption schemes was raised in 1978, and there was no solution for 30 years. Partially homomorphic encryption schemes such as the Rivest-Shamir-Adleman (RSA), ElGamal, and Pailier have been developed, and the partially homomorphic encryption schemes are divided into the 1st to 4th generation homomorphic encryption schemes through the pre-fully homomorphic encryption (Pre-FHE) era.

<Types of homomorphic encryption>

Homomorphic encryption is a form of encryption that allows computations to be performed on encrypted data without access to a secret key. The results of these computations remain encrypted and may be viewed as an extension of symmetric key or public key encryption. The meaning of homomorphism is that in algebra, it represents homomorphism, and the encryption and decryption functions are processed homomorphically between plain text and cipher text. That is, homomorphic encryption is an encryption method where the results are the same as the original text processing results even if the encrypted data is directly processed in an encrypted state without decrypting it, and is classified into types as shown in Table 1 below.

Table 1

| Partially homomorphic encryption (PHE) | Only one type of mathematical operation (e.g., multiplication) is allowed for an unlimited amount of time on a given data set. |
|---|---|
| Somewhat homomorphic encryption (SHE) | Although an allowable range is wider than that of PHE, it is still limited and only a few additions and multiplications are allowed for a given data set. |
| Fully homomorphic encryption FHE) | As a best practice, an unlimited number of different types of computations are allowed on data, but it is significantly disadvantageous in terms of performance. |

When MyData of at least one user terminal 100 is utilized, the breakdown provision unit 380 may provide a breakdown of profits and details of utilized MyData and specification to at least one user terminal 100 on a monthly basis. Here, when storing MyData, a scheme of unique identification codes with which each user can be identified is separately prepared, and the connection between [unique identification code-user] is stored in a private blockchain or Hyperledger Fabric, so that MyData can be accessed in the system only by an authorized person or when making settlements. The provision range setting unit 390 may receive a provision range of at least one type of MyData from at least one user terminal 100. For example, when there are types of financial data A to Z, it is possible to choose whether to provide only types of financial data A to D or all types of financial data A to Z.

The consumption trend analysis unit 391 performs consumption trend analysis using at least one type of MyData, and when there is a purchase by the enterprise terminal 400 for consumption trend analysis, profits may be distributed to at least one user terminal 100 that has provided MyData used for the consumption trend analysis. An example of using consumption trend analysis is assumed to be the selection of crops at a farm, but it is obvious that the consumption trend analysis can be applied to various other fields and various analyses are possible.

For example, assuming that a farm makes a crop selection for this year, crop selection is not only the most basic decision-making process in generating farm income, but also acts as a major factor affecting the supply and demand of the crop in question as well as substitute and complementary crops related to it when looking at the market as a whole. In particular, since agricultural products, unlike industrial products, have inelastic characteristics on both the demand and supply sides, supply and demand instability issues frequently arise depending on the market situation of the selected crop. For example, when a certain crop is expected to fetch a high price and all farmers selects that crop, there may be excess supply in the market as a whole, causing prices to plummet, and the opposite situation also frequently occurs. For this reason, crop selection at the individual farm level should take into consideration not only one's own management characteristics but also the overall market supply and demand situation in the short and long term. That is, when crop selection is made solely by the decision-making of individual farms, there is a high possibility that inefficiencies will occur in supply and demand sides of the market. When information on which crops to select in the future will relatively guarantee profits and which crops will not be provided through policy tools to support farmers' decision-making on crop selection, many of the risks that arise in the process of generating profits for farmers can be resolved.

<Analysis model>

Inefficiencies in supply and demand can be resolved only when crop selection is made considering the overall market situation as well as at the individual farm level. From this perspective, demand growth crops are defined as crops for which consumer demand is expected to increase in the future and farm profits are expected, while supply and demand and price stabilization can be simultaneously achieved, to thereby improve the efficiency of the overall market. In addition, when selecting crops, three sides of demand, supply, and market situation are considered as selection criteria. First, on the demand side, it is necessary to identify how consumption trends have changed over time and in what direction they will change. Specifically, consumer acceptance, that is, the current status of consumption trends, should be identified while consideration should be given to the direction in which future trends will develop. Next, on the supply side, the production volume of each crop actually supplied to the market is preferentially considered. The production volume on the supply side is mainly based on the cultivation area, yield, import and export status, etc. of each crop, and may also be understood as an indicator of market attractiveness, such as the market size and market growth rate of the crop in question. In addition, not only domestic production volume thereof but also the import and export volume of each crop needs to be considered as a major factor. Finally, on the market situation side, it includes a larger category of factors such as a market mechanism formed by the combination of the previously mentioned demand and supply sides and substitutes and complements relationships or the possibility of processed products that externally influences a relevant market.

The traditional market balance model has been mainly used as an economic theory that considers the demand, the supply, and the market situation. On the supply and demand side, analysis utilizing partial market equilibrium for crops subject to analysis was mainly done. On the market situation side, factors other than the market for the crop in question, that is, the market mechanism of other crops that are substitutes or complements to the crop in question, or the market for the final product when the crop in question is used as raw material (intermediate goods) for processed products, should be considered, and thus a plan to apply computational general equilibrium (CGE) based on general market equilibrium, which is a higher concept than partial market equilibrium, may also be considered. However, this requires rigorous and extensive empirical data on related crops, but the statistical data available in Korea is insufficient to apply the CGE. In addition, as an alternative, developing a growth crop setting index using variables for the supply, demand, and market situation as the basis for selection criteria may be considered. However, it may be difficult to secure a basis consistent with economic theory because the selection criteria may be subjectively designated.

Accordingly, the expected utility hypothesis (EUH) can be used as a basis for crop selection criteria. The EUH has been mainly used in the field of risk analysis, but in an embodiment of the present invention, it is introduced into a crop selection mechanism and applied to set selection criteria. Under EUH, it is assumed that the demand, supply, and market situation previously presented as selection criteria are comprehensively reflected in a market price, and the market price serves as a signal that conveys the market supply and demand situation to farmers who grow crops. It is assumed that farmers recognize this market price signal and select crops to maximize expected utility generated from their profits under the premise that profits obtained from cultivating the crops in question are risky assets.

Under EUH, what farmers want to maximize is the expected utility obtained from profits rather than profits. The expected utility for profits derived from each crop is estimated using a mean-variance model, and this estimated expected utility of profits is converted into time series data, to set what kind of trend expected utility will show in the future as a criterion for crop selection. In the mean-variance model, crop profits are treated as a random variable as they involve risk, and expected utility is composed of the mean and variance corresponding to the first and second moments of the corresponding probability distribution. To this end, it is first assumed that the demand (consumption trend), supply (production volume and import/export volume), and market situation (substitutes and complement relationships between them, market trends of processed products, etc.) set as criteria for selecting growth crops are expressed as market prices. Next, it is assumed that when a consumer pays a price for a certain crop, a purchase amount for the crop corresponds to the farm profit on a producer side. This is a rather strong assumption considering the distribution stage, but since the focus is on discovering crops with growing demand, even if the assumption is somewhat unrealistic, it can be justified in that the assumption provides a basis for selection criteria. That is, since a consumer purchase amount for a certain crop is the result of a transaction in a situation where the market is in balance, it can be seen as being balanced with the profits of the producing farmer according to the market mechanism. In addition, under the expected utility hypothesis, the purchase amount and the farm profits do not necessarily have to be the same in that the decision maker, who is the farmer, maximizes the expected utility of profits rather than maximizing profits. This can be understood as a kind of monotonic transformation relationship.

In the above assumption, when the profit (earnings) earned by a representative farm participating in the market in period t from selling crop k is expressed as $\pi^k_t$, it is expressed as Expression 1 below.

Expression 1

$$\pi_t^k = PD_t^k \times QD_t^k - PM_t^k \times QM_t^k - C_t^k + E_t^k$$

PD$^k_t$ refers to a domestic market price of crop k in period t, and QD$^k_t$ refers to the domestic sales volume. Therefore, PD$^k_t$×QD$^k_t$ corresponds to the domestic revenue of crop k in period t and corresponds to a domestic purchase amount of crop k. PM$^k_t$ refers to an import price of crop k in period t, and QM$^k_t$ refers to an import quantity. That is, PM$^k_t$×QM$^k_t$ corresponds to an import amount of crop k in question in period t. C$^k_t$ and E$^k_t$ refer to the cost and export amount for crop k of a representative farm, respectively.

The profit presented in Expression 1 can be understood as a type of random variable. This is because the price is uncertain in each period t. Of course, other variables are basically random variables, but for the convenience of analysis, it is assumed that only the market price is a random variable. In addition, by applying the mean-variance model, the expected utility for the profit in Expression 1 is derived as Expression 2.

Expression 2

$$EU(\pi_t^k) = E(\pi_t^k) - \frac{1}{2} \times r \times Var(\pi_t^k)$$

E(.) refers to an expected value, that is, the average, and Var(.) refers to variance. As described above, since probability distribution may be assumed as revenue $\pi^k_t$ is set as a random variable, the average and variance may be utilized, r refers to the Arrow-Pratt absolute risk-aversion coefficient, which measures the degree of risk aversion of crop k related to $\pi^k_t$, which corresponds to a risk asset. In Expression 2, EU(.) means expected utility. In particular, U(.) refers to a utility function. Although U(.) can take various forms of utility functions, it takes the utility function in the form of an exponential function, which is widely used in the mean-variance model.

Expression 3

$$U(\pi_t^k) = -\exp(-r\pi_t^k)$$

When the utility function presented in Expression 3 is used, the Arrow-Pratt absolute risk-aversion coefficient can be derived as in Expression 4.

Expression 4

$$r = \frac{\dfrac{\partial U}{\partial (\pi_t^k)^2}}{\dfrac{\partial U}{\partial \pi_t^k}}$$

Based on the expected utility hypothesis, when selecting crop k in period t, a representative farm makes a decision that maximizes Expression 2. To this end, when an initial point in time when empirical data exists is denoted as t = 0 and the final point in time is denoted as t = T, time series data for expected utility is expressed as shown in Expression 5.

Expression 5

$$\left\{ EU(\pi_t^k) \right\}_{t=0}^{t=T}$$

In Expression 5, {.} is a symbol that represents time series data in a way that represents a series. When a future point in time at which no empirical data exists is expressed as t=T+I (where I = 1, 2, ...), a representative farm applies the expected utility hypothesis and has a decision-making mechanism as shown in Expression 6 below.

Expression 6

$$k \in \mathrm{arg}max_k [EU(\pi_{t=T+1}^{k=1}), EU(\pi_{t=T+1}^{k=2}), \ldots, EU(\pi_{t=T+1}^{k=K})]$$

However, k is a choice variable for crop k with k∈{1, 2, .., K} and corresponds to discrete choice. In other words, when there is a discrete choice for a random crop, the representative farm makes a decision to select the crop that provides the highest expected utility of profit in the (t=T+1) period.

In Expression 6, a predicted value for the expected utility of profit for each crop is required. Based on structured big data, the expected utility of profit for each crop can be predicted by applying an artificial neural network (ANN) model, which is popularly used in the big data field. Recently, various models have recently been developed and applied in the field of AAA machine learning, but in that time series data on expected utility is constructed and predicted for each crop, the predicted value can be obtained by applying a feed-forward neural network (FFNN) model, which is a type of univariate time-series-related ANN model. Like other neural network models, the FFNN model also has a structure in which neurons, which act as an artificial neural network between an input layer and an output layer, are located in hidden layers and convert input values into output values. For the convenience of analysis, under the assumption that a single hidden layer exists, when a single hidden layer is assumed to exist and the expected utility of k-crops from the (T-1) period to the (T-P) period is expressed as a p-system single time series, the input layer can be expressed in the form of a sequence. In this case, when a different weight is applied to each input, the total input and the output layer that is the result corresponding to the total input can be expressed as Expression 7 and Expression 8.

Expression 7

$$TEU^k = \sum_{p=1}^{P} w_i^k EU(\pi_{t=T-p}^k) + b^k$$

Expression 8

$$z^k = f(TEU^k)$$

In this case, $TEU^k$ means the total input, and $b^k$ corresponds to the bias in the total input. The output value from a single hidden layer is expressed as $z^k$. The function f(.) corresponds to an activation function whose domain is the total input, and a commonly used logistic function is applied for the function f(.). In addition to the above-mentioned crop selection, it is obvious that the FFNN model may be used to calculate the direction of industrial product production or product launch by various enterprises and determine their number.

The purchase details addition unit 393 may scan and upload a purchase details receipt from the user terminal 100 or transmit purchase details data in a case where consent is given to the use of a purchase details receipt to the enterprise terminal 400 when the enterprise terminal requests that additional purchase details be included in the MyDdata used for the consumption trend analysis, and distribute profits according to provision of purchase details data to the user terminal 100 that provided the purchase details data. For example, even if card usage details are collected, only [affiliated store name-payment amount-date] is recorded and details of what items were purchased at the affiliated store are not contained. For example, when a user purchases a total of 100,000 won worth of dog toys, dog chews, dog food, and dumplings at E-Mart, this indicates that most of the items purchased are pet supplies. Nevertheless, since the purchase details are only displayed as [E-mart-distribution shopping-100,000 Won] in the purchase details receipt, consumption analysis may not be accurate.

Accordingly, when the purchase details receipt is photographed by the user terminal 100, the purchase details addition unit 393 may analyze the purchase details receipt using optical character recognition (OCR) to generate purchase details data, and may analyze consumption trends more accurately by sorting and matching [purchase details data-card data] in date and time order and adding it as purchase details data when card details are later collected in MyData, thereby enabling more accurate analysis of consumption trends. In this case, the purchase details addition unit 393 may enter the gallery on the user terminal 100, that is, the photo storage folder, search for a photo of the purchase details receipt, and upload the photo or collect text data read by the OCR as purchase details data, and then delete the uploaded photo of the purchase details receipt. In this case, the user does not have to separately delete the photo of the purchase details receipt, and the purchase details addition unit 393 does not have to search the photo storage box again to read the once uploaded purchase details data.

Hereinafter, an operation process according to the configuration of the MyData service provision server of FIG. 2 described above will be described in detail using FIGS. 3 and 4 as an example. However, it will be apparent that the embodiment is only one of various embodiments of the present invention, and the present invention is not limited thereto.

Referring to FIG. 3, as in FIG. 3A, when at least one user terminal 100 consents to information provision of MyData, the MyData service provision server 300 may set a range and period of provision of the information, and send the information to the enterprise terminal 400. As in FIG. 3B, when desired target data is set by the enterprise terminal 400, the MyData service provision server 300 may extract MyData that satisfies this target data and distribute profits as shown in FIG. 3Cto the user terminal 100 that has provided the MyData that satisfies the target data. As in FIG. 3D, the MyData service provision server 300 may provide the same effect as receiving a salary by making monthly settlements, thereby inducing a virtuous cycle in which users participate willingly. A platform (tentative name, MMM: Monthly Money MyData) according to an embodiment of the present invention may provide MyData with which continuous profits may be generated as shown in FIG. 4A. To overcome the problem in FIG. 4B, a platform as shown FIG. 4C may be constructed and profits may be distributed as shown in FIG. 4D.

Matters that are not described about the method of providing the MyData service using information provision and profit distribution of FIGS. 2 to 4 are the same as or may be easily inferred from the content described about the method of providing the MyData service using information provision and profit distribution with reference to FIG. 1, and thus description thereof will be omitted below.

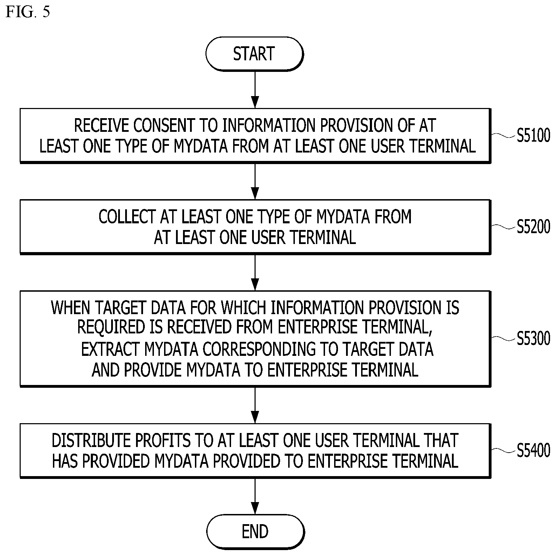

FIG. 5 is a diagram showing a process of transmitting and receiving data between components included in the system for providing the MyData service using information provision and profit distribution of FIG. 1 according to an embodiment of the present invention. Hereinafter, an example of the process of transmitting and receiving data between components will be described with reference to FIG. 5, but the present application is not limited to this embodiment. It is obvious to those skilled in the art that the process of transmitting and receiving data shown in FIG. 5 may be changed according to the various embodiments described above.

Referring to FIG. 5, the MyData service provision server receives consent to information provision of at least one type of MyData from at least one user terminal (S5100).

In addition, the MyData service provision server collects at least one type of MyData from at least one user terminal (S5200). When the MyData service provision server receives target data for which information provision is required from the enterprise terminal, the MyData service provision server extracts MyData corresponding to the target data and provides the MyData to the enterprise terminal (S5300).

In addition, the MyData service provision server distributes profits to at least one user terminal that has provided the MyData provided to the enterprise terminal (S5400).

The order between the above-described operations S5100 to S5400 is only an example and the present invention is not limited thereto. That is, the order between the above-described operations S5100 to S5400 may be changed, and some of the operations may be executed simultaneously or deleted.

Matters that are not described about the method of providing the MyData service using information provision and profit distribution in FIG. 5 are the same as or may be easily inferred from the content described about the method of providing the MyData service using information provision and profit distribution with reference to FIGS. 1 to 4, and thus description thereof will be omitted below.

The method of providing the MyData service using information provision and profit distribution according to an embodiment described with reference to FIG. 5 may also be implemented in the form of a recording medium containing instructions, such as an application or program module, which are executable by a computer. Computer-readable media may be any available media that can be accessed by a computer, and include both volatile and non-volatile media, and removable and non-removable media. In addition, the computer-readable media may include all computer storage media. The computer storage media include both volatile and non-volatile media and removable and non-removable media implemented in any method or technology for storage of information such as computer-readable instructions, data structures, program modules or other data.

The method of providing the MyData service using information provision and profit distribution according to an embodiment of the present invention described above may be executed by an application installed by default on a terminal (this may include a program included in a platform or operating system that is installed by default on a terminal), and may also be executed by an application (i.e., a program) installed directly on a master terminal by a user through an application provision server such as an application store server, or a web server related to the application or the service. In this sense, the method of providing the MyData service using information provision and profit distribution according to an embodiment of the present invention described above may be implemented as an application installed by default in a terminal or directly installed by a user, and recorded on a computer-readable recording medium such as a terminal.

The above description of the present invention is for illustrative purposes, and those skilled in the art will understand that the present invention may be easily modified into other specific forms without changing its technical idea or essential features. Therefore, the embodiments described above should be understood in all respects as illustrative and not restrictive. For example, each component described as unitary may be implemented in a distributed manner, and similarly, components described as distributed may also be implemented in a combined form.

According to the MyData service provision system using information provision and profit distribution, it is possible to collect MyData and build a database when a user terminal agrees to information provision of MyData, extract MyData corresponding to desired target data among MyData when an enterprise terminal requests the desired target data and transmit the MyData to the enterprise terminal, distribute profits to the user terminal that provides MyData corresponding to the target data on a monthly basis to thereby form a virtuous cycle structure, and attract long-term customers by providing monthly MyData to the enterprise terminal and allowing the enterprise terminal to apply for a subscription service.

The scope of the present invention is defined by the claims described below rather than the detailed description above, and all changes or modifications derived from the meaning and scope of the claims and the equivalent concept thereof should be construed as being included in the scope of the present invention.

## Claims

1. A system for providing a MyData service using information provision and profit distribution, comprising:

   at least one user terminal that consents to information provision of at least one type of MyData and receives profit distribution when the at least one type of MyData of which information is provided is utilized;
   an enterprise terminal that uploads target data for which the information provision is required and receives MyData corresponding to the target data; and
   a MyData service provision server that includes:

   a consent confirmation unit that receives consent to the information provision of the at least one type of MyData from the at least one user terminal;
   a collection unit that collects the at least one type of MyData from the at least one user terminal;
   an information provision unit that extracts MyData corresponding to the target data for which the information provision is required and provides the MyData to the enterprise terminal when the target data is received from the enterprise terminal; and
   a profit distribution unit that distributes profits to the at least one user terminal that has provided the MyData provided to the enterprise terminal.

2. The system of claim 1, wherein the MyData service provision server further includes a periodic payment unit that collects the at least one type of MyData on a monthly basis from the at least one user terminal and provides monthly MyData when the MyData is provided to the enterprise terminal.

3. The system of claim 2, wherein the MyData service provision server further includes a subscription provision unit that induces payment for a MyData subscription service for an enterprise terminal that continuously requires the monthly MyData provided on a monthly basis, and distributes profits to the at least one user terminal on a monthly basis.

4.  The system of claim 1, wherein the at least one type of MyData includes data in medical, financial, energy, distribution, transportation, small business, welfare, living, and academic fields.

5.  The system of claim 1, wherein the MyData service provision server further includes a consumption customized offer unit that provides an offer of the enterprise terminal corresponding to a consumption pattern of the at least one user terminal to the at least one user terminal in consideration of the consumption pattern when the at least one type of MyData is MyData in a financial field.

6.  The system of claim 1, wherein the MyData service provision server further includes a breakdown provision unit that provides a breakdown of a profit amount and details of the utilized MyData to the at least one user terminal on a monthly basis when the MyData of the at least one user terminal is utilized.

7.  The system of claim 1, wherein the MyData service provision server further includes a provision range setting unit that receives a provision range of the at least one type of MyData from the at least one user terminal.

8.  The system of claim 1, wherein the MyData service provision server further includes a consumption trend analysis unit that performs consumption trend analysis using the at least one type of MyData and distributes profits to the at least one user terminal that has provided MyData used for the consumption trend analysis when there is a purchase by the enterprise terminal for the consumption trend analysis.

9.  The system of claim 8, wherein the MyData service provision server further includes a purchase details addition unit that scans and uploads a purchase details receipt from the user terminal or transmits purchase details data in a case where consent is given to the use of a purchase details receipt to the enterprise terminal when the enterprise terminal requests that additional purchase details be included in the MyData used for the consumption trend analysis, and distributes profits according to provision of the purchase details data to a user terminal that provided the purchase details data.

FIG. 1

FIG. 2

300

CONSENT CONFIRMATION UNIT 310

COLLECTION UNIT 320

INFORMATION PROVISION UNIT 330

PROFIT DISTRIBUTION UNIT 340

PERIODIC PAYMENT UNIT 350

SUBSCRIPTION PROVISION UNIT 360

CONSUMPTION CUSTOMIZED OFFER UNIT 370

BREAKDOWN PROVISION UNIT 380

PROVISION RANGE SETTING UNIT 390

CONSUMPTION TREND ANALYSIS UNIT 391

PURCHASE DETAILS ADDITION UNIT 393

FIG. 3

MYDATA
INFORMATION
PROVISION

SETTING OF
PROVISION
RANGE

*300*

DB

(a)

ENTERPRISE
REQUEST

*400*

TARGET
DATA

*300*

TRANSMISSION

MYDATA

TARGET DATA

EXTRACTION

(b)

DISTRIBUTION
OF PROFITS

*300*

*100*

MYDATA

TARGET DATA

DISTRI
BUTION
OF PROFITS

(c)

MONTHLY
SETTLEMENT

*100*

MONTHLY
REGULAR
INCOME

*300*

SUB
SCRIPTION
SERVICE

*100*

(d)

FIG. 4A

FIG. 4B

EP 4 506 871 A1

# CURRENT PROBLEMS AND IMPROVEMENT PLANS FOR MYDATA BUSINESS

## CURRENT STATUS AND PROBLEMS OF MY DATA BUSINESS

- **CUSTOMER DISSATISFACTION DUE TO ONE-TIME BENEFITS**
  : CURRENT MYDATA BUSINESS OPERATORS PROVIDE ONE-TIME BENEFITS IN ORDER TO OBTAIN CONSENT TO OBTAIN/USE CUSTOMER INFORMATION, BUT CUSTOMERS CONSIDER WITHDRAWING INFORMATION PROVISION BECAUSE THERE ARE NO ADDITIONAL BENEFITS AFTER CONSENTING TO PROVIDE PERSONAL INFORMATION (PERCEPTION THAT THEIR DATA IS MONEY IS REINFORCED).

- **CURRENT FRAGMENTED MYDATA BUSINESS**
  : MOST MYDATA BUSINESS ENTERPRISES AR IMPLEMENTING MYDATA BUSINESS BY COLLECTING/USING THEIR OWN DATA OR PARTIALLY CONSENTED DATA, BUT THERE ARE LIMITATIONS IN LINKING AND ANALYZING VARIOUS TYPES OF DATA

- **LIMITATIONS OF DATA DEMANDING** ENTERPRISES IN SECURING EFFECTIVE DATA
  : MANY MANUFACTURERS/OR DISTRIBUTORS ARE ACUTELY AWARE OF ABSENCE OF CUSTOMER BEHAVIOR DATA THAT IS ACTUALLY NECESSARY FOR BUSINESS ACTIVATION, AND THERE IS NO PLATFORM THAT CAN COLLECT DATA THAT MEETS REQUIREMENTS

THERE ARE LIMITS TO ACTIVATION OF MYDATA BUSINESS WITH THIS BOTTLENECK

## IMPROVEMENT POINTS

① ✓**MONTHLY PROFIT DISTRIBUTION TO MY DATA CUSTOMERS**
- CALCULATE RANGE OF DATA PROVIDED BY CUSTOMER, RECEIVE COMMISSION FROM ENTERPRISE THAT USES THIS DATA, AND DISTRIBUTE/RETURN PROFITS TO CUSTOMER

② ✓**SECURING SUSTAINABILITY OF MY DATA BUSINESS**
- MY DATA CUSTOMERS EARN MONTHLY PROFITS AND CONTINUOUSLY PROVIDE DATA
- ENTERPRISES ALSO CONTINUE TO PURCHASE MONTHLY DATA TO ANALYZE CHANGES IN CUSTOMER TRENDS/TRACK TARGET MARKETING

③ ✓**NEW ECOSYSTEM INNOVATION IN MY DATA BUSINESS**
- ESTABLISH ENVIRONMENT WHERE CUSTOMERS WHO HAVE CONSENTED TO PROVIDE INFORMATION PROVIDE INFORMATION SO THAT ENTERPRISES THAT REQUIRE ANALYSIS OF TREND CHANGES THROUGH CUSTOMER DATA/ENTERPRISES THAT REQUIRE TARGET MARKETING THAT MEETS CUSTOMER NEEDS CAN FREELY PURCHASE DATA THEY NEED

# CONCEPTUAL DIAGRAM AND BENEFITS OF MY DATA, WHICH PROVIDES MONTHLY ALLOWANCE

EP 4 506 871 A1

## MMM VIRTUOUS CYCLE CONCEPT DIAGRAM

AUTONOMOUS OFFER BENEFIT RESPONSE

DATA PROVISION REQUEST

UTILIZATION OF DATA PROVISION

**MMM Data Platform**

CUSTOMER

DISTRIBUTION OF PROFITS

PAYMENT OF COSTS

ENTERPRISE

PROVISION OF CUSTOMIZED BENEFITS

- SELECT/CONSENT TO RANGE OF DATA PROVISION (CARD USAGE DETAILS, INSURANCE SUBSCRIPTION INFORMATION, INFORMATION ON APPS USED, ETC.)

- COLLECTION OF MY DATA INFORMATION THAT HAS BEEN CONSENTED TO BY CUSTOMER
- RESPOND TO REQUESTS FROM ENTERPRISES USING DATA

- REQUEST NECESSARY DATA NEEDED TO ACTIVATE ENTERPRISE
- PURCHASE OF MONTHLY DATA

MMM (ABBREVIATION FOR Monthly Money My data)

## CUSTOMER ADVANTAGES

➢ GENERATE CONTINUOUS PROFITS ON MONTHLY BASIS JUST BY PROVIDING INFORMATION SUCH AS MY SPENDING DATA AND APP USAGE INFORMATION

➢ DEPENDING ON RANGE OF DATA PROVISION, ENTERPRISES UTILIZING IT ARE DIVERSIFIED AND PROFITS INCREASE ACCORDINGLY.

➢ RATIONAL CONSUMPTION IS POSSIBLE BY PROVIDING CUSTOMIZED OFFERS FROM VARIOUS ENTERPRISES THAT TAKE USERS' CONSUMPTION PATTERNS INTO CONSIDERATION

## ENTERPRISE ADVANTAGES

➢ ENTERPRISES CAN SEPARATELY PURCHASE ONLY DATA THEY NEED AT CURRENT TIME

➢ ENTERPRISES CAN SEPARATELY PURCHASE ONLY DATA THEY NEED AT CURRENT TIME

➢ ONLY NEEDED DATA CAN BE USED BY PAYING COMMISSION, REDUCING COSTS FOR CREATING NEW CUSTOMERS, ETC.

FIG. 4D

EP 4 506 871 A1

# ADDITIONAL EXPLANATION OF DISTRIBUTION OF MONTHLY PROFITS
# TO CUSTOMERS WHO PROVIDE MY DATA

METHOD OF SHARING COMMISSIONS RECEIVED IN RETURN FOR PROVIDING DATA TO ENTERPRISES
IN DEMAND FOR DATA WITH THOSE INVOLVED IN EXTRACTION

**MMM**
**(My Data Platform)**

CUSTOMER A (MALE, 30S)
CUSTOMER B (FEMALE, 20S)
CUSTOMER C (FEMALE, 30S)
CUSTOMER D (MALE, 20S)
CUSTOMER E (FEMALE, 40S)
CUSTOMER F (MALE, 40S)
CUSTOMER G (FEMALE, 40S)
CUSTOMER H (FEMALE, 50S)
CUSTOMER ——
CUSTOMER I (0, 00...)

- CUSTOMER CARD SPENDING DETAILS
- APP DOWNLOAD DETAILS
- PRIMARY APP INFORMATION
- REGULAR PAYMENT DETAILS
- INSURANCE ENROLLMENT INFORMATION
- CONSENT TO RECEIVE MARKETING
- ——
- ——

CUSTOMER SELECTS RANGE OF DATA
PROVISION (DIFFERENTIAL PROFITS
MAY OCCUR IN CONNECTION WITH RANGE
OF DATA PROVISION/CONSUMER NEEDS)

**ENTERPRISE 1**

ENTERPRISE Needs: DATA REQUEST TO ANALYZE CONSUMPTION TRENDS OF CUSTOMERS IN THEIR 20S

MMM Platform: -DATA PROVISION RANGE/FEE NEGOTIATION -PROVIDES CARD CONSUMPTION DETAILS FOR PEOPLE IN THEIR 20S (ANONYMIZED/PSEUDONYMIZED)

ESTABLISHMENT OF ENTERPRISE STRATEGY: SEE ESTABLISHMENT OF STRATEGY FOR ATTRACTING PEOPLE IN THEIR 20S

MMM Platform: DATA EXTRACTION TARGET BENEFITS SHARE (20S) EXAMPLE) N-DATA EXTRACTION SUBJECT MMM20%: 70%/N

**ENTERPRISE 2**

ENTERPRISE Needs: TARGET MARKETING TARGETING HOUSEWIVES USING COMPETITORS IN THEIR 40S AND 50S

MMM Platform: -NEGOTIATION OF NUMBER OF DATA EXTRACTION SUBJECTS AND COMMISSIONS -EXTRACTION AND DELIVERY OF TARGET MARKETING SUBJECT

ENTERPRISE MARKETING: IMPLEMENT TARGETED MARKETING TO INDUCE PURCHASES (PROVIDE SUPERIOR BENEFITS TO ATTRACT NEW CUSTOMERS -> INCREASE CUSTOMER SATISFACTION)

MMM Platform: DATA EXTRACTION TARGET SUBJECT BENEFITS SHARE (SUBJECT) EXAMPLE) N-DATA EXTRACTION SUBJECT MMM10%: 90%/N

**ENTERPRISE 3**

ENTERPRISE Needs: TARGET MARKETING SUBJECT FOR NEW APP LAUNCH

MMM Platform: - EXTRACTING LIST OF CUSTOMERS USING SIMILAR APPS AND NEGOTIATING COMMISSIONS

ENTERPRISE MARKETING: EXECUTE TARGET MARKETING FOR APP DOWNLOADS (PROVIDE ADDITIONAL BENEFITS FOR APP DOWNLOADS-> ATTRACT CUSTOMERS)

MMM Platform: DATA EXTRACTION SUBJECT BENEFITS SHARE (SUBJECT) EXAMPLE) N-DATA EXTRACTION SUBJECT MMM30%: 70%/N

**ENTERPRISE 4**

ENTERPRISE Needs: CREATION OF NEW CUSTOMERS IN 00S

MMM Platform: -NEGOTIATION OF RELEVANT DATA -COMMISSION NEGOTIATION

ENTERPRISE ANALYSIS: -00000000

MMM Platform: DATA EXTRACTION SUBJECT BENEFITS SHARE (SUBJECT) EXAMPLE) N-DATA EXTRACTION SUBJECT MMM40%: 60%/N

EXAMPLE 1) MMM CONTRACTS WITH ENTERPRISE 2 FOR 100 MILLION WON AS A COMMISSION, PROVIDES A LIST OF 10,000 TARGET CUSTOMERS THAT FIT THE PURPOSE, AND DISTRIBUTES 90 MILLION WON, EXCLUDING 10%, TO 10,000 PEOPLE (9,000 WON PER PERSON).
EXAMPLE 2) MMM CONTRACTS WITH ENTERPRISE 3 FOR A COMMISSION OF 200 MILLION WON, PROVIDES A TARGET LIST OF 30,000 PEOPLE FOR NEW APP DOWNLOADS, AND DISTRIBUTES 180 MILLION WON, EXCLUDING 20% COMMISSION, TO 30,000 PEOPLE (6,000 WON PER PERSON).
-> CUSTOMER A IS INCLUDED IN ALL OF THE ABOVE DATA EXTRACTION SUBJECTS AND RECEIVES 15,000 WON
+ A PER MONTH (ACCORDING TO ADDITIONAL DATA EXTRACTION) ... AS THE NUMBER OF ENTERPRISES/ORGANIZATIONS WITH SUCH DATA NEEDS INCREASES, INDIVIDUAL MONTHLY PROFIT INCREASES.
-> ENTERPRISE CAN UTILIZE DATA THEY NEED ON MONTHLY BASIS, SO THEY NEED TO CONTINUOUSLY PURCHASE DATA AS NEEDED (YEARLY CONTRACTS AVAILABLE)

FIG. 5

```
                        ┌─────────┐
                        │  START  │
                        └────┬────┘
                             │
                             ▼
   ┌───────────────────────────────────────────────────────┐
   │     RECEIVE CONSENT TO INFORMATION PROVISION OF AT     │──S5100
   │  LEAST ONE TYPE OF MYDATA FROM AT LEAST ONE USER TERMINAL │
   └───────────────────────┬───────────────────────────────┘
                           │
                           ▼
   ┌───────────────────────────────────────────────────────┐
   │        COLLECT AT LEAST ONE TYPE OF MYDATA FROM        │──S5200
   │              AT LEAST ONE USER TERMINAL                │
   └───────────────────────┬───────────────────────────────┘
                           │
                           ▼
   ┌───────────────────────────────────────────────────────┐
   │  WHEN TARGET DATA FOR WHICH INFORMATION PROVISION IS   │
   │     REQUIRED IS RECEIVED FROM ENTERPRISE TERMINAL,     │──S5300
   │    EXTRACT MYDATA CORRESPONDING TO TARGET DATA         │
   │        AND PROVIDE MYDATA TO ENTERPRISE TERMINAL       │
   └───────────────────────┬───────────────────────────────┘
                           │
                           ▼
   ┌───────────────────────────────────────────────────────┐
   │  DISTRIBUTE PROFITS TO AT LEAST ONE USER TERMINAL THAT │──S5400
   │  HAS PROVIDED MYDATA PROVIDED TO ENTERPRISE TERMINAL   │
   └───────────────────────┬───────────────────────────────┘
                           │
                           ▼
                        ┌─────────┐
                        │   END   │
                        └─────────┘
```

<div align="center">

**INTERNATIONAL SEARCH REPORT**

</div>

| | International application No. |
|---|---|
| | **PCT/KR2023/004493** |

| A. | CLASSIFICATION OF SUBJECT MATTER |
|---|---|

**G06Q 10/06**(2012.01)i; **G06Q 20/12**(2012.01)i; **G06Q 10/10**(2012.01)i; **G06Q 20/20**(2012.01)i

According to International Patent Classification (IPC) or to both national classification and IPC

| B. | FIELDS SEARCHED |
|---|---|

Minimum documentation searched (classification system followed by classification symbols)

G06Q 10/06(2012.01); G06F 16/182(2019.01); G06F 16/9536(2019.01); G06Q 30/02(2012.01); G06Q 30/08(2012.01); G16H 20/70(2018.01); G16H 50/30(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 마이데이터(mydata), 수집(collection), 동의(agreement), 수익(profit), 분배 (distribution)

| C. | DOCUMENTS CONSIDERED TO BE RELEVANT |
|---|---|

| Category* | Citation of document, with indication, where appropriate, of the relevant passages | Relevant to claim No. |
|---|---|---|
| DY | KR 10-2201679 B1 (PARK, Sung Kap) 12 January 2021 (2021-01-12)<br>See paragraphs [0005], [0067]-[0068] and [0073]. | 1-9 |
| Y | KR 10-2022-0017202 A (YOON, Myung Cheol) 11 February 2022 (2022-02-11)<br>See paragraphs [0068]-[0073]. | 1-9 |
| Y | 김윤경. 마이데이터로 인한 인텐트 마케팅 기회. online post. 18 October 2021, non-official translation (KIM, Yungyeong. Intent Marketing Opportunity with My Data). [Retrieved on 09 June 2023]. Retrieved from <URL: https://www.ascentkorea.com/intent-marketing-opportunities-dueto-mydata></URL:>.<br>See page 3. | 7 |
| A | KR 10-2021-0153817 A (NAM, Ki Won) 20 December 2021 (2021-12-20)<br>See entire document. | 1-9 |
| A | KR 10-2021-0087662 A (KIM, Han Sae) 13 July 2021 (2021-07-13)<br>See entire document. | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 July 2023** | **07 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2">**INTERNATIONAL SEARCH REPORT**<br>**Information on patent family members**</td><td colspan="2">International application No.<br><br>**PCT/KR2023/004493**</td></tr>
<tr><td>Patent document<br>cited in search report</td><td>Publication date<br>(day/month/year)</td><td>Patent family member(s)</td><td>Publication date<br>(day/month/year)</td></tr>
<tr><td>KR     10-2201679    B1</td><td>12 January 2021</td><td>None</td><td></td></tr>
<tr><td>KR   10-2022-0017202    A</td><td>11 February 2022</td><td>None</td><td></td></tr>
<tr><td>KR   10-2021-0153817    A</td><td>20 December 2021</td><td>CN      116097293    A<br>EP       4167171    A1<br>WO   2021-251697    A1</td><td>09 May 2023<br>19 April 2023<br>16 December 2021</td></tr>
<tr><td>KR   10-2021-0087662    A</td><td>13 July 2021</td><td>KR     10-2292019    B1</td><td>23 August 2021</td></tr>
</table>

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220041603
- KR 102201679
- KR 102356613